Europäisches Patentamt

European Patent Office

Office européen des brevets

(19)

(11) Numéro de publication: **0 021 906**
**B1**

(12) **FASCICULE DE BREVET EUROPEEN**

(45) Date de publication du fascicule du brevet: **24.03.82**

(51) Int. Cl.³: **F 41 G 3/22,** G 01 D 5/20

(21) Numéro de dépôt: **80400784.7**

(22) Date de dépôt: **03.06.80**

(54) **Dispositif de mesure de l'orientation relative de deux corps et système de repérage de direction correspondant.**

(30) Priorité: **06.06.79 FR 7914441**

(43) Date de publication de la demande:
**07.01.81 Bulletin 81/1**

(45) Mention de la délivrance du brevet:
**24.03.82 Bulletin 82/12**

(84) Etats contractants désignés:
**DE GB IT SE**

(56) Documents cités:
**FR - A - 2 239 690**
**GB - A - 1 414 972**
**US - A - 3 121 228**
**US - A - 4 017 858**

(73) Titulaire: **THOMSON-CSF**
**173, Boulevard Haussmann**
**F-75360 Paris Cedex 08 (FR)**

(72) Inventeur: **Constant, Claude**
**"THOMSON-CSF" - SCPI F-173, Bld Haussmann**
**F-75360 Paris Cedex 08 (FR)**

(74) Mandataire: **Trocellier, Roger et al,**
**"THOMSON-CSF" - SCPI 173, bld Haussmann**
**F-75360 Paris Cedex 08 (FR)**

Courier Press, Leamington Spa, England.

## Dispositif de mesure de l'orientation relative de deux corps et système de repérage de direction correspondant

La présente invention concerne un dispositif de mesure de l'orientation relative de deux corps applicable plus particulièrement à un système de repérage de direction.

Il est parfois utile de repérer avec une certaine précision la direction vers laquelle un axe est orienté sans avoir de contact matériel avec celui-ci.

On rencontre ce type de problème, en particulier, dans les systèmes viseurs de casque utilisés dans les avions de combat; le fonctionnement d'un tel système est rappelé brièvement ci-après. Par un dispositif collimateur annexe, le pilote voit à travers une glace semi-réfléchissante solidaire du casque et interposée sur un axe de vision monoculaire, l'image d'un réticule projeté à l'infini en superposition avec la scène extérieure.

Lorsqu'il veut désigner une cible de la scène observée, il amène à coïncider ce réticule avec la cible et signale que la coïncidence est réalisée au moyen par exemple d'une commande par bouton poussoir prévue à cet effet.

A condition de repérer, au moment de la signalisation, la position exacte de son casque, il est alors assez aisé de déterminer par rapport à l'avion, la direction de visée du pilote et de désigner l'objectif à un système d'arme, ou de pointer dans cette direction un système optique ou autre.

La présente invention permet de réaliser un système de repérage de direction répondant à un tel problème. La direction à repérer est liée à une structure libre dont les mouvements s'effectuent dans un volume spatial déterminé. Dans l'application particulière envisagée, la structure libre comporte le casque du pilote et le volume est délimité par les débattements possibles de la tête du pilote à l'intérieur du cockpit. Le dispositif de repérage comporte une première partie solidaire de la structure mobile et une seconde partie fixée à une structure extérieure, l'avion en l'occurence, pour mesurer les mouvements angulaires relatifs de la structure mobile par rapport à un système d'axes de référence lié à la structure externe. Le dispositif de repérage permet ainsi, à partir de points fixes par rapport à l'avion, de repérer la position d'un objet porté par le casque du pilote, et de remonter, par là, grâce à un calcul, à la direction de visée.

Le casque étant porté par le pilote, il importe que la partie du dispositif qui est fixée au casque soit la plus légère, la moins encombrante, et présente le minimum de danger et d'inertie.

Les systèmes de repérage de direction existent sous différentes formes; ils combinet des éléments rayonnants dits radiateurs avec des éléments récepteurs correspondants dits senseurs de radiation ou capteurs. Une technique basée sur le couplage optique consiste à utiliser des sources lumineuses ponctuelles telles des diodes électroluminescentes et des mosaïques linéaires de photodétecteurs associées à des caches optiques.

Une autre catégorie de systèmes dans laquelle se place le dispositif de mesure objet de l'invention, utilise le couplage magnétique pour déterminer l'orientation relative de deux trièdres cartésiens. Selon une réalisation connue décrite dans le brevet français n° 74 26325 publié sous le n° 2 239690 ou dans le brevet américain d'origine n° 3 868564, un premier trièdre constitue le trièdre de référence et correspond au radiateur solidaire de la structure avion, le deuxième trièdre correspond au capteur solidaire du casque du pilote. Chaque trièdre est défini au moyen d'un groupement de trois bobines d'axes X, Y et Z respectivement. Les bobines du radiateur sont alimentées simultanément par des courants alternatifs d'excitation différents et déterminés en sorte de produire un champ conique tournant. Le circuit d'excitation est asservi à celui de réception des informations induites dans les bobines du capteur en sorte que l'axe du champ conique résultant reste pointé en direction du capteur. L'électronique de réception et de mesure élabore à l'aide d'un calculateur les trois angles d'Euler déterminant l'orientation relative des trièdres.

L'asservissement du champ d'émission sur la position du capteur introduit d'une part, une erreur de pointage quie se traduit par une incertitude sur les angles cherchés et d'autre part, une limitation de la zone spatiale d'évolution du capteur.

Un objet de la présente invention est de réaliser un dispositif de mesure d'orientation et de repérage de direction qui remédie aux inconvéninets précités et qui permet par la suppression de la boucle d'asservissement de l'émetteur de simplifier l'électronique de traitement. La revendication 1 définit la solution du problème que l'invention vise à résoudre. Les revendications 2 à 9 concernant des modes particuliers de réalisation de cette invention.

Le dispositif de mesure comporte des moyens générateurs des courants d'excitation qui alimentent successivement les trois bobines du radiateur par un même signal alternatif constitué par une onde entretenue pure, et des moyens de traitement des signaux induits dans les trois bobines du capteur qui sont connectés successivement en sortie de chaque bobine du capteur au cours de chaque phase d'alimentation d'une bobine du radiateur, en sorte de traiter neuf signaux correspondants aux projections selon le trièdre capteur des trois champs successifs produits par le radiateur à l'emplacement du capteur et d'en déduire à l'aide de moyens de calcul annexes les trois angles d'Euler correspondant à l'orientation relative des trièdres et consécutivement l'orientation d'un axe lié au trièdre radiateur.

Les particularités et advantages de la présente invention apparaîtront au cours de la description qui suit donnée à titre d'exemple à l'aide des figures annexées qui représentent:

— la figure 1, un schéma relatif aux angles d'Euler à identifier;

— la figure 2, un schéma relatif au procédé utilisé selon l'invention;

— la figure 3, un diagramme d'un dispositif de mesure d'orientation ou système de repérage de direction conforme à l'invention;

— la figure 4, des formes d'ondes et schémas de distribution temporelle relatifs au fonctionnement d'un dispositif selon les figures 2 et 3; et

— la figure 5, un diagramme d'un exemple de réalisation d'un dispositif de mesure selon la figure 3.

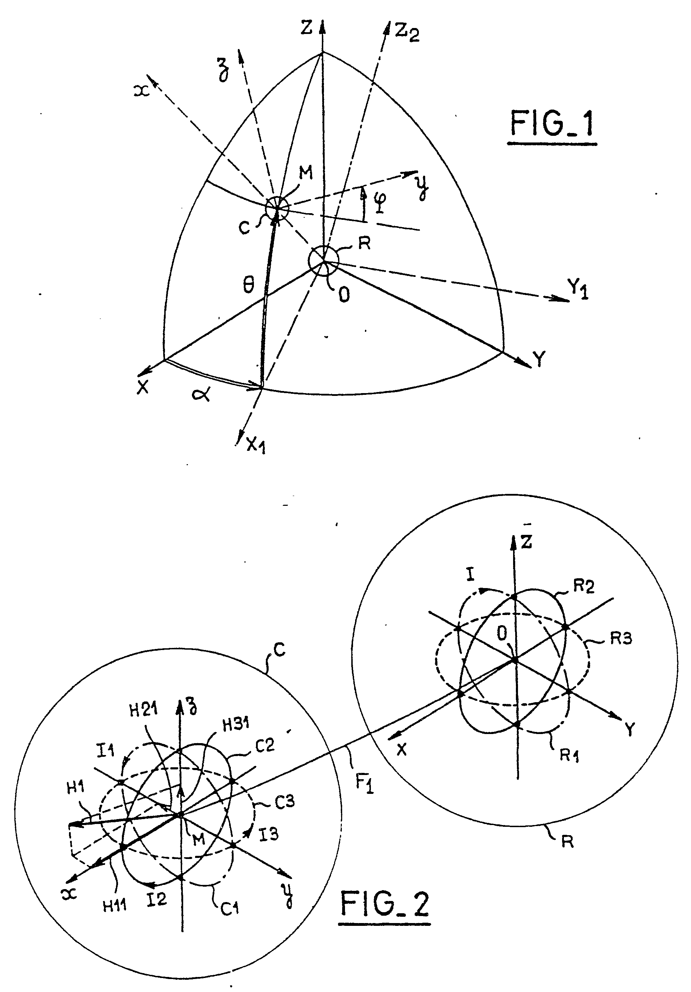

En se reportant à la figure 1, les axes orthogonaux X, Y et Z représentent un trièdre de référence lié à un premier corps sur lequel est fixé l'un des éléments du dispositif de mesure, un radiateur R. Les axes orthogonaux x, y et z représentent le trièdre lié au deuxième corps sur lequel est fixé l'autre élément, le capteur C en l'occurence. Les corps sont mécaniquement découplés, le deuxième corps est libre de se mouvoir par translation et/ou rotation. La rotation se traduit par les angles d'Euler $\alpha$ en gisement, $\theta$ en site, et $\varphi$ en roulis autour de la direction à repérer. Cette dernière est advantageusement constituée par l'un des axes du trièdre x, y, z pour simplifier les calculs, l'axe x dans l'exemple figuré. En outre, afin de simplifier la représentation l'axe x est considéré passant par le point origine O du trièdre de référence X, Y, Z. Dans l'application à un viseur de casque, l'axe X correspond de préférence à l'axe longitudinal de l'avion, dirigé vers l'avant, le trièdre X, Y, Z représente l'avion, le capteur C est solidaire du casque du pilote et x représente la direction de visée à identifier.

Le figure 2 relative au procédé mis en oeuvre conformément à l'invention montre les groupements de bobines R1, R2 et R3 du radiateur et C1, C2 et C3 du capteur, qui permettent de définir les trièdres respectifs. Chaque groupement comporte trois bobines. Chaque bobine est assimilable à une spire fermée dont le plan est orthogonal à celui de chacune des autres bobines due groupement. La bobine R1 dans le plan ZOY présente l'axe X, la bobine R2 dans le plan ZOX présente l'axe Y et la bobine R3 dans le plan XOY présente l'axe Z. Il en est de même pour les bobines C1, C2, C3 du capteur C définissant les axes x, y et z. Le passage d'un courant excitation I dans la bobine R1 du radiateur R produit un champ de valeur maximale selon l'axe X de la bobine. Le champ H1 produit au point origine M du trièdre capteur x, y, z est tangent à la ligne de force F1 passant par M. Le champ H1 donne naissance à des courants induits dans les bobines C1, C2 et C3 du capteur. Les courants induits sont proportionnels aux projections du champ H1 selon les axes x, y et z. Ainsi le courant I1 induit dans la bobine C1 résulte du champ H11 selon x; de même I2 et I3 résultent des champs H21 et H31 selon y et z respectivement. La valeur du champ H1 est proportionnelle à la valeur du courant I et varie par ailleurs en $1/d^3$, d'étant la distance OM entre les trièdres. On verra ultérieurement le procédé de mesure utilisé pour calculer à partir des neuf composantes les angles d'Euler $\alpha$, $\theta$ et $\varphi$ et en déduire la direction de visée.

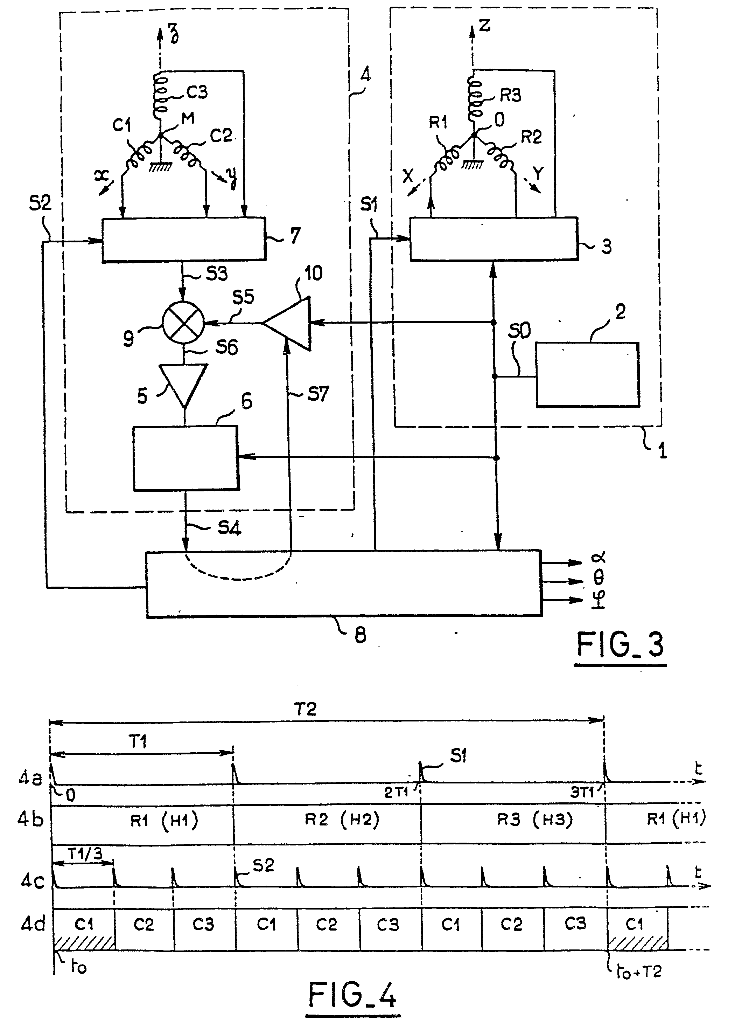

Suivant le diagramme général de la figure 3, le système comporte une partie émettrice de champ 1 incluant les bobines R1, R2, R3 du radiateur et les moyens d'alimentation correspondant formés d'un générateur 2 et d'un circuit de commutation 3. Le circuit 3 reçoit par une première entrée la sortie SO du générateur, par une seconde entrée un signal de commande S1 et comporte trois sorties d'alimentation respectives des bobines R1 à R3. Le générateur 2 peut consister en un oscillateur; il délivre le signal SO constitué par une onde entretenue pure de la forme A sin $\omega$t destiné à produire le courant d'excitation dans les bobines. Le signal de commande S1 est un signal périodique du type représenté sur la figure 4a pour connecter par commutations successives l'entrée SO sur chacune des sorties d'alimentation de bobine. La bobine R1 est alimentée au cours d'une première période T1 (figure 4b), puis R2 au cours de la seconde période T1 et enfin R3 durant une troisième période; le cycle complet d'émission a pour durée T2 = 3T1 et est répété à la période T2.

La partie réceptrice 4 comporte le groupement de bobines C1, C2, C3 du capteur connecté à des circuits d'amplification 5 et de traitement 6 à travers un circuit de commutation 7 de manière à recueillir les composantes selon x, y, z de chacun des trois champs émis. Ce circuit de commutation 7 comporte donc trois entrées réceptrices des signaux issus respectivement des trois bobines, une entrée de commande et une sortie unique. Le signal de commande S2 correspondant est du type représenté sur la figure 4c, périodique et de période T1/3 pour commuter successivement les bobines C1, C2 et C3 vers la sortie S3 (figure 4d). Le cycle complet comporte neuf périodes du signal S2 afin de recueillier les neuf composantes des champs H1, H2 et H3 successifs. Chaque bobine du capteur est connectée trois fois au cours d'un cycle T2. Le traitement en 6 comporte une démodulation cohérente à partir du signal SO d'émission.

Les signaux traités S4 sont transmis à un calculateur annexe 8 tel un calculateur de bord, pour calculer les angles $\alpha$, $\theta$ et $\varphi$.

Le récepteur comporte une boucle formée par un comparateur différentiel 9 dans lequel le signal S3 est comparé à un signal de référence S5 d'amplitude variable contrôlée par le calculateur. Le signal S5 est une onde de même nature que S3 et est produit à partir du signal S0 appliqué à un circuit amplificateur à gain variable 10. L'asservissement créé par la boucle fonctionne de manière à annuler le signal d'erreur S6 en sortie du comparateur résultant de la différence entre S3 et S5 et à en déduire la valeur de la composante correspondante. L'annulation de l'erreur S6 est obtenue par variation du signal S7 de commande de gain, cette variation étant calculée par le circuit 8. Compte tenu de la distribution temporelle à la période T2 d'une même composante (figures 4b, et 4d), le calculateur 8 stocke les valeurs correctives correspondantes et produit l'annulation au cours d'au moins deux périodes T2 successives.

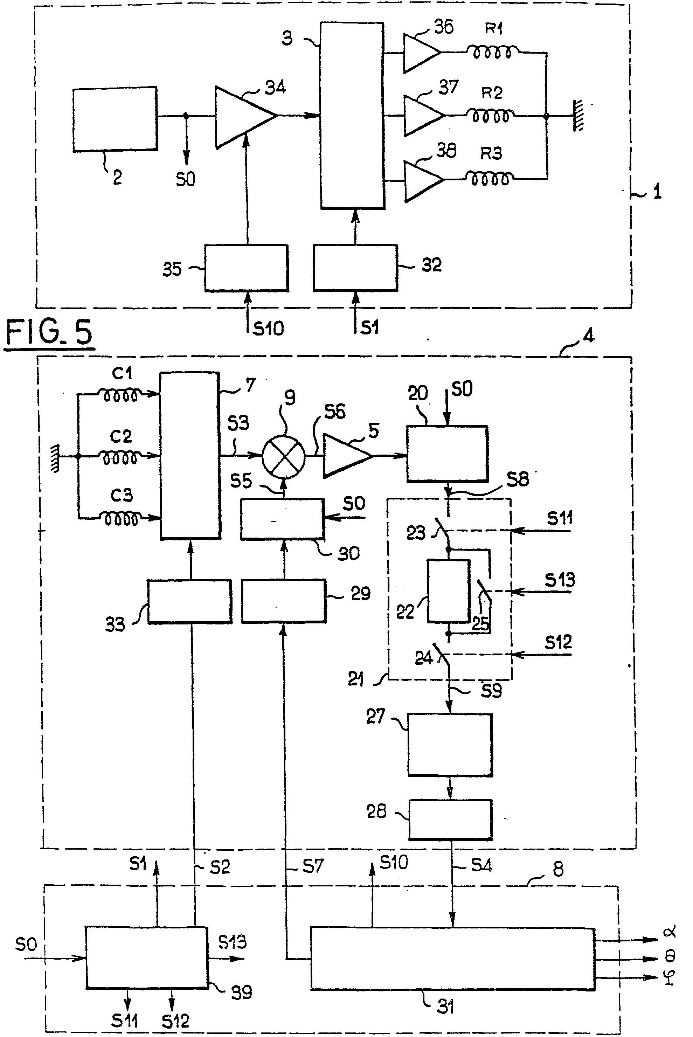

Le fonctionnement apparaîtra plus clairement à l'aide du diagramme plus détaillé de la figure 5 correspondant à un exemple de réalisation. Les mêmes éléments ou signaux que ceux de la figure 3 y sont référencés de même manière. Le traitement comporte un circuit démodulateur synchrone 20 dont la sortie continue S8 correspond à l'amplitude du signal d'erreur S6 redressé et détecté. Ce signal est appliqué à un circuit intégrateur cohérent 21 composé d'un intégrateur 22, des commutateurs de branchement 23 et 24 et d'un commutateur de remise à zéro 25. La sortie d'intégration S9 est transformée en donnée numérique par un circuit de conversion et de codage 27 pour produire la donnée S4 transmise au calculateur 8 à travers un registre tampon 28. A partir de ce signal le calculateur élabore la donnée S7 appliquée au circuit à gain variable formé d'un registre 29 et d'un multiplicateur numérique-analogique 30 où le signal S0 est multiplié par le signal S7.

Le fonctionnement de la boucle est le suivant pour chaque composante de champ: on considère par exemple la composante H11 selon x du champ H1 créé par la bobine R1. Le courant induit correspondant en C1 est reçu pendant la période allant de $t_0$ à $t_0$ + T1/3 d'un premier cycle considéré (Fig. 4d) et donne un signal S3. L'intégrateur 22 est remis à zéro au début de chaque période T1/3. Après remise à zéro, le commutateur 23 est commandé à la fermeture et le signal démodulé S8 est intégré. Un peu avant la fin de la période T1/3 considérée les commutateurs 23 et 24 sont commandés respectivement à l'ouverture et à la fermeture, ce qui permet de coder la valeur analogique d'erreur en 27. Le calculateur élabore une variation correspondante de l'information S7 pour que la nouvelle valeur multipliée par S0 en 30 produise la compensation désirée.

Cette nouvelle valeur est toutefois stockée jusqu'à la période suivante concernant la même composante et qui débute à l'instant $t_0$ + $t_2$. Après annulation de l'erreur S6, la valeur S7 qui a été transmise au registre 29 représente, à un coefficient multiplicateur près connu dû au circuit 30 et la chaîne de démodulation et d'intégration, la valeur de la composante H11. Le commutateur 24 est commandé à l'ouverture à la fin de chaque période T1/3. A titre indicatif, la fréquence de l'oscillateur 2 peut être par exemple de l'ordre de 20 KHz et la période T1/3 choisie égale à une vingtaine de cycles de l'onde oscillateur ce qui correspond à 1/100 sec. soit cent mesures par seconde. La durée d'intégration proprement dite est légèrement inférieure à T1/3 compte tenu des durées de commutations des circuits 23, 24 et 25 produites en début et en fin de période T1/3.

Le calculateur 8 élabore sous forme numérique les signaux de commande S1 et S2 des circuits de commutation ou circuits multiplex 3 et 7 auxquels ils sont transmis à travers des registres 32 et 33. Il élabore en outre un signal S10 appliqué à un circuit amplificateur à gain variable 34 à travers un registre 35, étant entendu que le circuit 34 est du type à commande numérique. Ce circuit est interposé entre l'oscillateur 2 et le circuit de commutation 3. Le but de ces circuits est de compenser l'affaiblissement du signal qui varie en $1/d^3$, $d$ étant la distance capteur-radiateur, et consécutivement de préserver le rapport signal à bruit. Le signal S10 est élaboré en tenant compte des variations d'amplitude présentées par les signaux S3 successifs au cours du temps, ces variations ètant engendrées par les déplacements du capteur lié à la structure mobile. Les signaux délivrés par le commutateur 3 sont amplifiez à un niveau convenable par les circuits respectifs 36, 37 et 38 pour l'excitation séparée des bobines. Le circuit 39 dans le calculateur 8 correspond à un ensemble de synchronisation élaborant, à partir du signal S0, les signaux de commande S1 et S2 des commutateurs 3 et 7, ainsi que ceux S11, S12 et S13 destinés aux commutateurs 23, 24 et 25.

Le procédé de calcul des angles d'Euler est le suivant: en supposant que le trièdre x, y, z en M est orienté de même manière que le trièdre de référence X, Y, Z on obtient avec les neuf composantes de champ une première matrice [H i, j] de coefficients résultant de:

$$HX = h11\ I1 + h12\ I2 + h13\ I3$$

$$HY = h21\ I1 + h22\ I2 + h23\ I3$$

$$HZ = h31\ I1 + h32\ I2 + h33\ I3$$

où I1, I2 et I3 sont les courants dans les bobines C1, C2 et C3 et h i, j des coefficients tels que H11 I1 correspond à la composante H11 de H1 (fig. 2), h12 I2 à la composante H12 de H2, etc. HX représente la somme des trois composantes successives selon X, et la somme

$$\vec{H} = \vec{HX} + \vec{HY} + \vec{HZ}$$

correspond à celle

$$\vec{H1} + \vec{H2} + \vec{H3}$$

des champs successifs. Le passage de la position de référence en M à la position réelle résulte des rotations $\alpha$ autour de Z, $\theta$ autour de Y et $\varphi$ autour de X (fig.1). On peut écrire la matrice de rotation [R] correspondante où $\alpha$, $\theta$ et $\varphi$ sont les valeurs à trouver. Si [H'i,j] représente la matrice des composantes après rotation, c'est-à-dire celles effectivement reçues au niveau du capteur, on a la relation [H'i,j] = [R].[H i,j]; [H'] étant connu, il suffit de connaître [H] pour obtenir [R] par le calcul.

La matrice [H] est déterminée par le calcul à partir des informations reçues en se basant notamment sur les remarques ci-après:

— les composantes selon x, y, z, de chaque champ H1, H2, H3 sont connues, on peut en déduire les modules des champs;

— les directions de H1, H2, H3 ne dépendent que de la position M du capteur dans l'espace et plus précisément de la direction OM;

— chaque vecteur champ H1, H2 ou H3 est dans le plan formé par la direction OM entre radiateur et capteur et l'axe magnétique de la bobine excitée, ainsi H1 est dans le plan OM, OX (fig.2);

— l'angle $\gamma$ que fait le vecteur champ en M avec la direction OM ($\gamma1$ pour H1, $\gamma2$ pour H2, etc.) est connu car le diagramme de rayonnement des bobines du radiateur est connu;

— cet angle $\gamma$ reste le même le long de la direction OM et ne dépend que de cette direction, si l'on appelle $\delta$ l'angle de la direction OM avec l'axe magnétique correspondant (OX pour le champ H1) l'angle $\gamma$ est le même le long de toutes les génératrices du cône de sommet 0 et de demi-angle au sommet $\delta$ obtenu par rotation de OM autour de X ceci pour raison de symétrie de la distribution de champ autour de l'axe magnétique;

— l'angle $\gamma$ peut être défini de manière simple en fonction de $\delta$ en assimilant la bobine excitée à une spire de petite dimension elle-même assimilable à un doublet magnétique, on peut écrire $tg\gamma = \frac{1}{2}tg\delta$ et les composantes selon OM et la direction perpendiculaire dans le plan formé par le champ et OM sont connues en fonction des cos $\delta$ et sin $\delta$ à une constante multiplicative près;

— l'angle $\beta$ que fait chaque champ avec le plan formé par les deux autres champs, par exemple $\overrightarrow{H1}$ avec le plan $\overrightarrow{H2}$, $\overrightarrow{H3}$ peut être exprimé en fonction de $\delta$ selon la relation:

$$tg\beta = 2/3 \left(tg\delta + \frac{1}{tg\delta}\right).$$

A partir des remarques précitées, il est déterminé un algorithme de calcul de la matrice [H] des composantes de $\overrightarrow{H1}$, $\overrightarrow{H2}$ et $\overrightarrow{H3}$ dans le repère radiateur X, Y, Z, il en est déduit la matrice de rotation

$$[R] = [H'i,j] \cdot [H^{-1}i,j]$$

où [H$^{-1}$] est la matrice [H] inversée, et consécutivement les angles d'Euler $\alpha$, $\theta$ et $\varphi$. L'établissement de cet algorithme est hors du cadre de la présente invention et n'est pas reproduit dans le détail. Si l'un des axes du trièdre mobile constitue la direction à repérer, l'identification de sa direction est immédiate, par exemple l'axe x est localisé angulairement par les valeurs $\alpha$ et $\theta$ vis-à-vis du trièdre de référence X, Y, Z.

Le procédé de calcul indiqué n'est pas à considérer comme limitatif, la programmation du calculateur étant faite selon des techniques connues en fonction des algorithmes de calcul à résoudre, eux-mêmes fonction du procédé retenu.

**Revendications**

1. Dispositif de mesure de l'orientation relative de deux corps mécaniquement indépendants, comportant un générateur de champ magnétique dit radiateur composé d'un premier groupement de trois bobines (R1, R2, R3) et d'un circuit d'alimentation comportant un oscillateur (2), un récepteur dit capteur composé d'un deuxième groupement de trois bobines (C1, C2, C3) alimentant un circuit de traitement des signaux (5.6) induits par amplification suivie de démodulation synchrone, chaque groupement étant solidaire d'un corps et ayant ses bobines orientées selon des directions orthogonales (X, Y, Z; x, y, z), definissant un trièdre cartésien pour le corps associé, le circuit de traitement (6) alimentant des moyens de calcul et de commande (8) délivrant l'information d'orientation relative des trièdres, caractérisé en ce que les circuits d'alimentation (2) et de traitement (5—6) sont connectés aux bobines correspondantes respectivement à travers un circuit de commutation (3,7) commandé à partir des moyens de calcul et de commande (8) en sorte, d'alimenter successivement les bobines du radiateur (R1, R2, R3) par un même signal alternatif (SO) constitué par l'onde entretenue pure délivrée par l'oscillateur (2), et de connecter séparément et successivement les bobines du capteur (C1, C2, C3) au circuit de traitement (6) au cours de chaque phase d'alimentation (T1) d'une bobine du radiateur.

2. Dispositif selon la revendication 1, caractérisé en ce que le récepteur comporte une boucle formée par un circuit comparateur différentiel (9) connecté par une entrée à la sortie du circuit de commutation (7) et par une deuxième entrée à un circuit à gain variable (10) qui reçoit le signal alternatif (SO) et qui est commandé par les moyens de calcul et de commande (8) formés par un calculateur annexe, la sortie du comparateur alimentant le circuit de traitement.

3. Dispositif selon la revendication 2, caractérisé en ce que le circuit de traitement comporte en aval d'un démodulateur synchrone (20) un circuit intégrateur cohérent (21) en série avec un circuit de conversion analogique- numérique et de décodage (27).

4. Dispositif selon la revendication 2 ou 3, caractérisé en ce que le circuit á gain variable comporte un circuit de conversion numérique-analogique et de multiplication (30) recevant un signal numérique de commande de gain (S7) du calculateur et le signal alternatif (SO), et alimentant par sa sortie la dexuième entrée du circuit comparateur différentiel (9).

5. Dispositif selon la revendication 3 ou l'ensemble des revendications 3 et 4, caractérisé en ce que les moyens de commande comportent un circuit de chronométrie (39) élaborant à partir du signal alternatif (SO), les signaux de commande (S1, S2) des circuits de commutation (3, 7) et des signaux de commande (S11, S12) et de remise à zéro (S13) destinés au circuit intégrateur cohérent (21).

6. Dispositif selon l'une quelconque des revendications 1 à 5, caractérisé en ce que le circuit d'alimentation comporte des moyens de compensation de l'atténuation en fonction de la distance capteur-radiateur sous forme d'un amplificateur à gain variable (34) interposé entre l'oscillateur (2) et le circuit de commutation associé (3) et commandé à partir des moyens de calcul et decommande (8).

7. Dispositif selon l'ensemble des revendications 2 à 6, caractérisé en ce que les circuits de calcul (31) du calculateur élaborent périodiquement les angles d'Euler présentés par les deux trièdres à partir des neuf signaux successifs (S4) issus du circuit de traitement et correspondant aux composantes des trois champs successifs produits à l'endroit du capteur par les bobines du radiateur excitées l'une après l'autre au cours d'un cycle (T2) de fonctionnement répété périodiquement, les composantes produites selon le trièdre capteur étant définies à partir des signaux induits dans les bobines du capteur.

8. Système de repérage de direction constitué par un dispositif selon l'une quelconque des revendications 1 à 7, et dans lequel la direction à repérer est constituée par l'une des axes du triédre capteur.

9. Système selon la revendication 8 destiné à équiper un système viseur de casque dans lequel le capteur (C) est solidaire du casque du pilote et le radiateur (R) solidaire de l'avion.

## Claims

1. Device for measuring the relative orientation of two mechanically independent bodies, comprising a magnetic field generator, termed as radiator, composed of a first arrangement of three coils (R1, R2, R3) and a feed circuit comprising an oscillator (2), a receiver, termed as a probe, composed of a second arrangement of three coils (C1, C2, C3) feeding a circuit (5—6) for processing the induced signals by amplification followed by synchroneous demodulation, each arrangement being joined with one body and having its coils oriented along perpendicular directions (X, Y, Z; x, y, z) defining a cartesian trihedron for the associated body, the processing circuit (6) feeding calculating and control means (8) delivering the relative orientation information of the trihedra, characterized in that the feeding (2) and processing circuits (5—6) are respectively connected to the corresponding coils through a switching circuit (3—7) controlled by the calculating and control means (8) in a manner to successively feed the coils of the radiator (R1, R2, R3) with the same alternating signal (SO) formed by the genuine sustained wave delivered by the oscillator (2), and to separately and successively connect the coils of the probe (C1, C2, C3) to the processing circuit (6) during each feeding cycle (T1) of one radiator coil.

2. Device of claim 1, characterized in that the receiver comprises a loop formed by a differential comparator circuit (9) connected at one input to the output of the switching circuit (7) and at a second input to a variable gain circuit (10) receiving the alternating signal (SO) and controlled by the calculating and control means (8) formed by an associated calculator, the output of the comparator feeding the processing circuit.

3. Device of claim 2, characterized in that the processing circuit comprises a coherent integrating circuit (21) in series with an analog-digital and decoding converter circuit (27) downstream of a synchroneous demodulator (20).

4. Device in accordance with claim 2 or 3, characterized in that the variable gain circuit comprises a digital-analog converter and multiplication circuit (30) receiving a digital gain control signal (S7) from the calculator and the alternating signal SO), and feeding the second input of the differential comparator circuit (9) by its output.

5. Device in accordance with claim 3 or both claims 3 and 4, characterized in that the control means comprise a chronometer circuit (39) generating the control signals (S1, S2) of the switching circuits (3, 7) and the control signals (S11, S12) as well as the zero reset signals (S13) provided for the coherent integrating circuit (21), from the alternating signal (SO).

6. Device in accordance with any of claims 1 to 5, characterized in that the feeding circuit comprises means for compensating the attenuation depending on the distance between the probe and the radiator, formed by a variable gain amplifier (34) inserted between the oscillator (2) and the associated switching circuit (3) and controlled by the calculating and control means (8).

7. Device in accordance with all of claims 2 through 6, characterized in that the calculating circuit (31) of the calculator periodically generates the Euler's angles presented by the two trihedra from the nine successive signals (S4) delivered by the processing circuit and corresponding to the components of the three successive fields produced at the location of the probe by the radiator coils excited one after the other during one operating cycle (T2) which is periodically repeated, the components produced in accordance with the probe trihedron being defined by the signals induced in the probe coils.

8. Direction finding system formed by a device in accordance with any of claims 1 to 7, and in which the direction to be identified is formed by one of the probe trihedron axes.

9. System in accordance with claim 8, for use in helmet sighting system in which the probe (C) is joined with the helmet of the pilot and the radiator (R) is joined with the aircraft.

## Patentansprüche

1. Vorrichtung zum Messen der Relativorientierung von zwei mechanisch voneinander unabhängigen Körpern, mit einem Magnetfeldgenerator, der als Strahler bezeichnet wird und aus einer ersten Gruppierung von drei Spulen (R1, R2, R3) und einem Speisekreis zusammengesetzt ist, welcher einen Oszillator (2) enthält, wobei ein als Aufnehmer bezeichneter Empfänger, der aus einer zweiten Gruppierung von drei Spulen (C1, C2, C3) gebildet ist, einen Schaltkreis (5—6) zur Verarbeitung der induzierten Signale durch Verstärkung und anschließende Synchrondemodulation speist, wobei jede Gruppierung fest mit einem Körper verbunden ist und ihre Spulen in zueinander senkrechten Richtungen (X, Y, Z; x, y, z) orientiert sind und für den zugeordneten Körper ein kartesisches Dreiflach definieren, und wobei der Verarbeitungsschaltkreis (6) Rechen- und Steuermittel (8) speist, welche die Relativorientierungsinformation der Dreiflache abgeben, dadurch gekennzeichnet, daß die Schaltkreise zur Speisung (2) und zur Verarbeitung (5) an die entsprechenden Spulen jeweils über einen Umschaltkreis (3—7) angeschlossen sind, der von den Rechen- und Steuermitteln (8) so gesteuert ist, daß nacheinander die Spulen (R1, R2, R3) des Strahlers mit demselben Wechselsignal (SO) gespeist werden, welches durch die von dem Oszillator (2) abgegebene reine, andauernde Schwingung gebildet ist, und getrennt und nacheinander die Spulen (C1, C2, C3) des Aufnehmers an den Verarbeitungsschaltkreis (6) während jeder Speisephase (T1) einer Spule des Strahlers anschließen.

2. Vorrichtung nach Anspruch 1, dadurch gekennzeichnet, daß der Aufnehmer eine Schleife umfaßt, die gebildet ist aus einer Differentialkomparatorschaltung (9), die an einem Eingang mit dem Ausgang des Umschaltkreises (7) verbunden ist und mit einem zweiten Eingang an einen Schaltkreis (10) mit variabler Verstärkung angeschlossen ist, welcher das Wechselsignal (SO) empfängt und von den Rechen- und Steuermitteln (8) gesteuert ist, die durch einen zugeordneten Rechner gebildet sind, wobei der Ausgang des Komparators den Verarbeitungskreis speist.

3. Vorrichtung nach Anspruch 2, dadurch gekennzeichnet, daß der Verarbeitungskreis hinter einem Synchrondemodulator (20) eine kohärente Integrierschaltung (21) in Reihe mit einem Schaltkreis (27) zur Analog/Digital-Umsetzung und Decodierung umfaßt.

4. Vorrichtung nach Anspruch 2 oder 3, dadurch gekennzeichnet, daß der Schaltkreis mit variabler Verstärkung eine Schaltung (30) zur Digital/Analog-Umsetzung und Multiplikation umfaßt, welche ein digitales Verstärkungssteuersignal (S7) des Rechners und das Wechselsignal (SO) empfängt und über ihren Ausgang den zweiten Eingang der Differentialkomparatorschaltung (9) speist.

5. Vorrichtung nach Anspruch 3 oder nach den beiden Ansprüchen 3 und 4, dadurch gekennzeichnet, daß die Steuermittel eine Zeitmeßschaltung (39) enthalten, die ausgehend von dem Wechselsignal (SO) die Steuersignale (S1, S2), der Umschaltkreise (3, 7) und Steuersignale (S11, S12) sowie Nullrücksetzsignale (S13) erzeugen, welche für die kohärente Integrierschaltung (21) bestimmt sind.

6. Vorrichtung nach einem der Ansprüche 1 bis 5, dadurch gekennzeichnet, daß die Speiseschaltung Mittel zur Kompensation der Dämpfung in Abhängigkeit von dem Abstand zwischen Aufnehmer und Strahler in Form eines Verstärkers (34) mit variabler Verstärkung unfaßt, welcher zwischen den Oszillator (2) und den zugeordneten Umschaltkreis (3) eingefügt ist und durch die Rechenund Steuermittel (8) gesteuert wird.

7. Vorrichtung nach sämtlichen Ansprüchen 2 bis 6, dadurch gekennzeichnet, daß die Rechenschaltung (31) des Rechners periodisch die Euler'schen Winkel erzeugt, die durch die zwei Dreiflache angegeben werden, und zwar ausgehend von den neun aufeinanderfolgenden Signalen (S4), die von der Verarbeitungsschaltung abgegeben werden un den Komponenten der drei aufeinanderfolgenden Felder entsprechen, welche an der Stelle des Aufnehmers durch die Spulen des Strahlers erzeugt werden, welche nacheinander während eines Arbeitszyklus (T2) erregt werden, der periodisch weiderholt wird, wobei die gemäß dem Aufnehmer-Dreiflach erzeugten Komponenten ausgehend von den in den Spulen des Aufnehmers induzierten Signalen definiert werden.

8. Richtungsortungssystem, das durch eine Vorrichtung nach einem der Ansprüche 1 bis 7 gebildet ist und bei welchem die zu ortende Richtung durch eine der Achsen des Aufnehmer-Dreiflachs gebildet ist.

9. System nach Anspruch 8, welches dazu bestimmt ist, ein Helmvisiersystem auszurüsten, bei welchem der Aufnehmer (C) mit dem Helm des Piloten fest verbunden ist und der Strahler (R) mit dem Flugzeug fest verbunden ist.

FIG_1

FIG_2

0021906

FIG_3

FIG_4

2

FIG. 5